# EUROPÄISCHE PATENTSCHRIFT

(11) **EP 2 094 429 B1**
(45) Veröffentlichungstag und Bekanntmachung des Hinweises auf die Patenterteilung: **23.05.2012**
(21) Anmeldenummer: 06828921.4
(22) Anmeldetag: 04.11.2006
(51) Int. Cl.: B23K 26/03, G01J 5/60

(54) **VERFAHREN UND VORRICHTUNG ZUR PROZESSÜBERWACHUNG BEI DER MATERIALBEARBEITUNG**
METHOD AND DEVICE FOR PROCESS MONITORING DURING THE WORKING OF A MATERIAL
PROCÉDÉ ET DISPOSITIF DE SURVEILLANCE DE PROCESSUS LORS DE L'USINAGE DE MATÉRIAUX

(43) Veröffentlichungstag der Anmeldung: 02.09.2009
(73) Patentinhaber: TRUMPF Werkzeugmaschinen GmbH + Co. KG, 71254 Ditzingen (DE)
(72) Erfinder: PFITZNER, Dieter, 71263 Weil der Stadt (DE); HESSE, Tim, 71254 Ditzingen (DE); MAGG, Winfried, 71254 Ditzingen (DE)
(74) Vertreter: Kohler Schmid Möbus
(86) Internationale Anmeldenummer: PCT/EP2006/010585
(87) Internationale Veröffentlichungsnummer: WO 2008/052591

(56) Entgegenhaltungen:
- US-A- 4 980 847
- US-A- 5 225 883
- US-A1- 2004 188 397
- US-B1- 6 344 625
- CHEN H B ET AL: "LASER PROCESS MONITORING WITH DUAL WAVELENGTH OPTICAL SENSORS" PROCEEDINGS OF LASER MATERIALS PROCESSING CONFERENCE ICALEO. PROCEEDINGS OF INTERNATIONAL CONGRESS ON THE APPLICATIONS OF LASERS AND ELECTRO-OPTICS, Bd. 1722, 3. November 1991 (1991-11-03), Seiten 113-122, XP000490945

## Beschreibung

Die Erfindung betrifft ein Verfahren zur Überwachung eines Bearbeitungsbereichs eines Werkstücks von dem Bearbeit und eine Vorrichtung zur Überwachung einer Laserbearbeitung eines Werkstücks gemäß dem Oberbegriff der Ansprüche 1 und 5 (siehe, z.B., DE 10 2004 051 876 A1).

Bei Laserbearbeitungsverfahren ist es häufig gewünscht und auch erforderlich, die Temperaturen innerhalb eines vorgegebenen Bearbeitungsbereichs bei der Bearbeitung zu bestimmen, um beispielsweise Rückschlüsse auf die jeweils einzuhaltende Qualität bei der Bearbeitung, die Einhaltung bestimmter Bearbeitungsbereiche, aber auch für die Regelung für die Bearbeitung ziehen zu können.

Da sich während der Bearbeitung die Temperaturen an den unterschiedlichen Positionen eines jeweiligen Bearbeitungsbereichs in Abhängigkeit einiger Parameter, wie beispielsweise der jeweiligen Laserleistung, die bei der Bearbeitung eingesetzt wird, der Auslenkgeschwindigkeit und/oder - richtung von Laserstrahlen und dem jeweils zu bearbeitenden Werkstück zeitlich und lokal verändern, ist eine ortsaufgelöst Bestimmung von Temperaturen innerhalb eines Bearbeitungsbereichs gewünscht.

Bekannte Systeme messen und beurteilen den Schweißprozess mit einzelnen Fotodioden oder CCD/- CMOS-Kameras. Dabei wird Infrarotstrahlung in Form einer einfachen Strahlungsintensitätsmessung erfasst. Bei diesen Strahlungsmessungen sind unter anderem Absoluttemperatur, Emissionskoeffizient, Ausleuchtung des Messfeldes etc. überlagert. Ferner sind Strahlungsintensitätsmessungen von Verschmutzungen der Optiken, Rauchen und Plasma im Beobachtungsstrahlengang stark abhängig. Daher ist eine Prozessbeurteilung mit Intensitätsmessgrößen ungenau.

Aus der DE 10 2004 051 876 A1 ist eine Anordnung zur ortsaufgelösten Temperaturmessung bekannt, wobei ein vorgebbarer Bearbeitungsbereich eines Werkstücks auf einen ortsaufgelöst messenden optischen Detektor abgebildet werden kann und im Strahlengang zwischen dem Bearbeitungsbereich und dem optischen Detektor mindestens ein die elektromagnetische Strahlung eines oder mehrerer Laserbearbeitungsstrahlen sperrendes optisches Filter angeordnet ist.

Aus der US 2004/0188397 A1 ist es bekannt, ein optisches Signal, das während der Materialbearbeitung durch ein Werkstück abgestrahlt wird, zu verwenden, um die Qualität der Werkstückbearbeitung zu beurteilen. Hierzu werden zwei optische Detektoren verwendet, wobei jeder Detektor unterschiedliche Frequenzbereiche erfasst. Die Detektorsignale werden an einen Monitor übergeben, der die Qualität der Werkstückbearbeitung erfasst.

Aus der US 6,344,625 B1 ist ein Verfahren zur Überwachung der Größenänderung eines Schmelzbades beim Laserschweißen bekannt. Hierbei ist es bekannt, die reflektierte thermische Strahlung in drei Spektralbereiche aufzuteilen und zu detektieren.

Aus der DE 10 2005 018 124 A1 ist eine materialunabhängige Temperaturmessung bekannt. Mit dem offenbarten Verfahren ist eine gleichzeitige Bestimmung der Temperatur und des Emissionsgrades eines inhomogenen Messobjektes möglich.

Die US 5,822,222 offenbart ein Pyrometer zur Erfassung mehrerer Wellenlängen. Außerdem ist ein Verfahren zum Bestimmen von Emissivitätsprofilen offenbart.

Aufgabe der vorliegenden Erfindung ist es, ein Verfahren und eine Vorrichtung bereit zu stellen, mit denen eine verbesserte Qualitätsüberwachung möglich ist. Diese Aufgabe wird durch ein Verfahren mit den Merkmalen des Anspruchs 1 gelöst. Die für zwei Wellenlängen erhaltenen Informationen können analysiert und zueinander in Beziehung gesetzt werden. Der Bearbeitungsbereich umfasst, gemäß der Erfindung, die Dampfkapillare, deren Schmelzfilmoberfläche, das umgebende Schmelzbad, das beim Laserschweißen entsteht, einen Schmelzbadnachlauf, den erstarrten Werkstoff und eine umliegende Wärmeeinflusszone. Durch eine geeignete Analyse kann eine Berechnung von Temperaturgradienten im Schmelzbadnachlauf, der erstarrten Schmelze und der Wärmeeinflusszone erfolgen. Dadurch kann beispielsweise eine Charakterisierung der Wärmeabfuhr in das Werkstück erfolgen. Außerdem können innere Schweißnahtfehler, wie Bindefehler, erkannt werden. Auch die Werkstoffbeeinflussung, wie beispielsweise Aufhärtung, kann bestimmt werden. Weiterhin ist es möglich, die tatsächlichen Schmelzbadabmessungen anhand der Phasenübergänge schmelzflüssig/fest zu ermitteln. Letztendlich ist eine Charakterisierung der Energieeinkopplung in den Werkstoff und damit ein Rückschluss auf innere Schweißnahtmerkmale, wie Schwankungen der Einschweißtiefe, Bindefehler am Überlappstoß etc. möglich. Somit ist das Verfahren zur Prozessüberwachung und insbesondere der Qualität des Bearbeitungsprozesses und der erzeugten Schweißnaht geeignet.

Für jedes von dem Detektorsystem erfasste Flächenelement wird aus der erfassten Strahlung ein Emissionskoeffizient ermittelt werden. Das Ermitteln der Absoluttemperatur und des Emissionskoeffizienten aus der bei zumindest zwei Wellenlängen gemessenen Strahlung kann durch an sich bekannte Verfahren der Verhältnisstrahlungspyrometrie und/oder durch eine analytische Anpassung der elektromagnetischen Strahlung an physikalische Strahlungsgesetze erfolgen. Hierzu wird die Strahlung jedes erfassten Flächenelements auf dem Werkstück mittels einer analytischen Trennung in eine Absoluttemperatur und in einen Emissionskoeffizienten umgerechnet. Somit entsteht ein Bild aus Temperaturwerten der Dampfkapillare, deren Schmelzfilmoberfläche, die die Dampfkapillare umgebende Schmelze, des Schmelzbadnachlaufs, des erstarrten Werkstoffs und der Wärmeeinflusszone mit der zusätzlichen, eindeutigen Information des Phasenübergangs schmelzflüssig/fest.

Besonders bevorzugt ist es, wenn unter Berücksichtigung der Temperatur, insbesondere der Absoluttemperatur, und des Emissionskoeffizienten eine Qualitätsbewertung durchgeführt wird. Das erfindungsgemäße Verfahren ist genauer als bekannte Verfahren. Beispielsweise kann eine schmelzflüssige Zone, auf der sich bereits eine Oxidschicht gebildet hat, genauer analysiert werden. In dieser Zone ist aufgrund der Oxidschicht ein höherer Emissionskoeffizient im Vergleich zur Schmelze vorhanden, wobei beide Zonen - mit und ohne Oxidschicht - ähnliche Temperaturen aufweisen. Bei bekannten Verfahren wird ein solcher Bereich fälschlicherweise als erstarrte Schmelze detektiert, da die Analyse des Phasenübergangs schmelzflüssig/fest auf einer Strahlungsintensitätsänderung, hervorgerufen durch den unterschiedlichen Emissionsgrad, basiert. Durch die getrennte Analyse der Temperatur und des Emissionskoeffizienten wird an einer solchen Stelle ein Sprung im Emissionskoeffizient aber nur eine geringe Änderung der Absoluttemperatur auftreten. Die Kontur und die Größe der schmelzflüssigen Phase lassen sich ermitteln, indem die Bereiche bestimmt werden, in denen die Absoluttemperatur unterhalb des Schmelzpunkts des Werkstoffs liegt. Ferner wird der Effekt kompensiert, dass die Temperatur und der Emissionskoeffizient entgegengesetzt wirken können. Eine hohe Absoluttemperatur bei niedrigem Emissionskoeffizient führt fälschlicherweise zu geringeren Strahlungsintensitätsmesswerten bzw. im Kamerabild zu einer dunkleren Darstellung eines offen liegenden Schmelzbads im Gegensatz zum festen Werkstoff. Damit wird fälschlicherweise bei der bekannten, einfachen Strahlungsintensitätsmessung eine geringere Messtemperatur eines Schmelzbads im Gegensatz zum erstarrten bzw. festen Werkstoff ermittelt.

Neben der Detektion des tatsächlichen Phasenübergangs schmelzflüssig/fest liefern Absoluttemperaturen ebenfalls verbesserte Beurteilungsmöglichkeiten für den erstarrten Werkstoff und der Wärmeeinflusszone. Hier können zeitliche und/oder örtliche Temperaturgradienten mit hoher Genauigkeit ermittelt werden und für eine Qualitätsaussage der Schweißverbindung herangezogen werden.

Bei einer vorteilhaften Verfahrensvariante kann vorgesehen sein, dass die von dem Bearbeitungsbereich emittierte Strahlung auf mehrere Einzelstrahlengänge aufgeteilt wird und die Einzelstrahlengänge gefiltert werden. Dadurch ist es möglich, die von einem Flächenelement abgestrahlte Strahlung bei unterschiedlichen Wellenlängen zu erfassen und zu analysieren. Die Aufteilung der ermittelten Strahlung kann beispielsweise mit einem Strahlteiler erfolgen. Alternativ kann die Strahlung in unterschiedlichen Flächenelementen zugeordnete Faseroptiken eingekoppelt werden, an deren Enden eine wellenlängenselektive Erfassung der Strahlung erfolgt.

Auf besonders einfache Art und Weise kann die von einem Flächenelement emittierte Strahlung bei zumindest zwei Wellenlängen erfasst werden, wenn für jedes Flächenelement eine optische Filterung für zumindest zwei Wellenlängen durchgeführt wird.

Weitere Vorteile der Erfindung ergeben sich, wenn mehrere wellenlängenabhängige Bilder des Bearbeitungsbereichs erzeugt werden. Aus diesen thermographischen Prozessbildern kann das tatsächliche Temperaturbild und ein Emissionskoeffizientenbild ermittelt werden. Somit lässt sich die Temperaturverteilung im Bearbeitungsbereich und die Emissionskoeffizientenverteilung im Bearbeitungsbereich auf einfache Art und Weise grafisch darstellen und auswerten.

In den Rahmen der Erfindung fällt außerdem eine Vorrichtung mit den Merkmalen des Anspruchs 5. Dabei kann mehreren Sensorelementen - für verschiedene Flächenelemente - dasselbe Filter zugeordnet sein. Es kann aber auch jedes Sensorelement ein eigenes Filter haben. Eine solche Vorrichtung ist zur Durchführung des erfindungsgemäßen Verfahrens geeignet, so dass die im Bezug auf das Verfahren genannten Vorteile erzielt werden können. Vorzugsweise bildet die erfindungsgemäße Vorrichtung mit einer Laserstrahlschweißvorrichtung eine Einheit. Dadurch ist es möglich, die Analyse und Qualitätsüberwachung simultan zur Lasermaterialbearbeitung durchzuführen. Hierbei kann ein kurzer zeitlicher oder örtlicher Abstand der Prozessüberwachung zum Schweißprozess toleriert werden.

Um die Analyse der bei unterschiedlichen Wellenlängen aufgenommenen Strahlung durchführen zu können, ist eine Auswerteeinrichtung zur Bestimmung eines Temperaturwerts und eines Emissionskoeffizienten für jedes Flächenelement vorgesehen.

Bei einer bevorzugten Ausführungsform kann ein Strahlteiler im Strahlengang vorgesehen sein. Durch einen Strahlteiler kann die von dem Bearbeitungsbereich abgestrahlte Strahlung auf mehrere Einzelstrahlengänge aufgeteilt und in selektiven, schmalbandigen Spektralbereichen über abbildende Optiken auf ein geeignetes Detektorsystem abgebildet werden. Dabei können insbesondere mehrere

Bilder auf einem Detektor entstehen. Aus diesen thermographischen Prozessbildern kann ein Temperaturbild und ein Bild der Emissionskoeffizienten berechnet werden.

Als Detektorsystem kann beispielsweise eine Matrix-Kamera vorgesehen sein. Vorzugsweise weist die Matrix-Kamera eine für die zu messende Temperaturstrahlung geeignete, d.h. ausreichend hohe, spektrale Empfindlichkeit auf. Alternativ können als Detektorsystem mehrere einzelne Kameras, insbesondere Matrix-Kameras, vorgesehen sein, wobei auf jede Einzelkamera ein einzelner, selektiver Spektralbereich abgebildet wird. Die bzw. zumindest eine Matrix-Kamera kann aus unterschiedlichen Halbleitermaterialien gefertigt sein.

Als Kameras eignen sich Detektoren für den Strahlungsbereich vom visuellen Spektralbereich über nahes bis zu fernem Infrarot. Als Kameras des Detektorsystems sind beispielsweise CCD, CMOS- und/oder InGaAs-Kameras geeignet, wobei diese Aufzählung keineswegs abschließend ist und weitere Kameraarten eingesetzt werden können. Wenn Einzelkameras eingesetzt werden, können auch mehrere unterschiedliche Kameras kombiniert werden. Beispielsweise können für unterschiedliche zu messende Spektralbereiche unterschiedliche Kameras mit verschiedenen spektralen Empfindlichkeiten verwendet werden.

Bei einer bevorzugten Ausgestaltung der Erfindung kann vorgesehen sein, dass das Detektorsystem mehrere Fotodiodenanordnungen umfasst. Dabei können die Fotodiodenanordnungen eine oder mehrere Fotodioden umfassen. Die Fotodiodenanordnungen können als spektral schmalbandige Einzel - oder Mehrfachdioden ausgeführt werden, um gleichzeitig für jedes Flächenelement im Bearbeitungsbereich den entsprechenden Strahlungsanteil zu detektieren. Die Mehrfach - oder Einzeldioden können aus unterschiedlichen Halbleitermaterialien ausgeführt sein.

Bei einer vorteilhaften Ausführungsform können im Strahlengang vor den Fotodiodenanordnungen Faseroptiken und/oder abbildende Optiken angeordnet sein. Durch die Fotodiodenanordnungen kann ein Matrix - Sensor gebildet werden. Die Fotodioden oder die Faseroptiken bzw. die Abbildungen der Flächenelemente des Werkstücks können dabei eine beliebige Anordnung zueinander aufweisen.

Durch die Filteranordnung kann die Strahlung jedes erfassten Flächenelements bei zumindest zwei Wellenlängen gefiltert werden, so dass von jedem Flächenelement zwei Bildpunkte mit unterschiedlicher spektraler Strahlungsinformation entstehen. Die Filteranordnung kann in die Kameramatrix integriert sein, auf der Matrixoberfläche vor den einzelnen Sensorelementen angeordnet sein oder zwischen Strahlteiler und dem Detektorsystem vorgesehen sein. Außerdem kann die Filteranordnung in den Strahlteilerspiegel integriert oder auf dem Strahlteiler angeordnet bzw. in diesen integriert sein.

Weiterhin ist es denkbar, dass die Filteranordnung ein Schachbrettmuster, ein Streifenmuster oder eine Anordnung optischer Einzelfilterelemente umfasst. Insbesondere kann die Filteranordnung je nach verwendetem Detektorsystem oder benötigtem lokalen Temperaturmessbereich geeignet gewählt werden. D.h. die Wellenlängen der Filter der Filteranordnung können an den zu messenden Temperaturbereich angepasst sein. Größere Filter werden bevorzugt in Verbindung mit Matrix-Kameras verwendet. Die Strahlung des gesamten Bearbeitungsbereichs wird durch einen Strahlteiler spektral neutral oder spektral selektiv auf mehrere Strahlengänge aufgeteilt. Dabei wird jeder Strahlengang einem Wellenlängenfilter zugeführt, der sich hinter dem Strahlteiler vor oder auf der Matrixanordnung befindet. Alternativ kann das optische Filter bereits auf dem Strahlteiler oder dem Strahlteilerspiegel aufgebracht sein. Somit wird die Strahlung des gesamten Bearbeitungsbereichs gefiltert. Werden einzelne Dioden verwendet, kann jeder Diode und somit jedem Flächenelement des Bearbeitungsbereichs ein kleines Filterelement zugeordnet sein, so dass nur die von einem Flächenelement ausgesandte Strahlung durch das Filterelement gefiltert wird.

Die Messanordnung wird mit einer Referenzstrahlungsquelle kalibriert. Dabei wird vorzugsweise ein Schwarzer Strahler verwendet, der eine homogene Temperatur sowie eine homogene Temperaturverteilung auf dessen Referenzstrahlungsfläche aufweist. Die Referenzstrahlung wird über die verwendete Vorrichtung/Optik zunächst auf den Detektoren abgebildet und nachfolgend eine Kalibrierung jedes Matrix-/Detektorelements vorgenommen.

Weitere Merkmale und Vorteile der Erfindung ergeben sich aus der nachfolgenden Beschreibung von Ausführungsbeispielen der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

Bevorzugte Ausführungsbeispiele der Erfindung sind in der Zeichnung schematisch dargestellt und werden nachfolgend mit Bezug zu den Figuren der Zeichnung näher erläutert. Es zeigt:
- Fig. 1: eine erste schematische Darstellung einer ersten Vorrichtung zur Qualitätsüberwachung einer Laserbearbeitung;
- Fig. 2: eine zweite schematische Darstellung einer zweiten Vorrichtung zur Qualitätsüberwachung einer Laserbearbeitung.

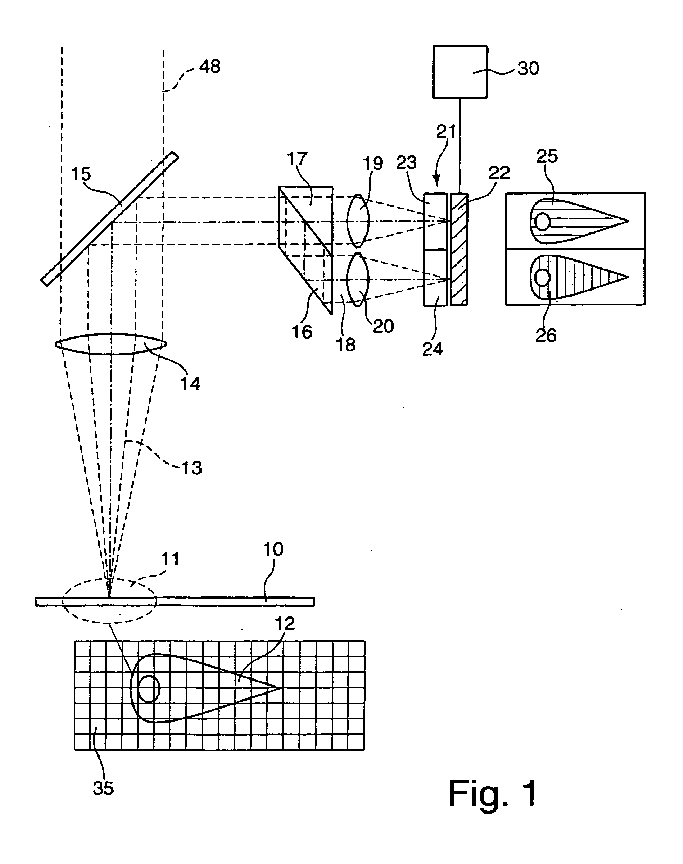

In der Figur 1 ist ein Werkstück 10 gezeigt, welches mit einem Laserstrahl 48 bearbeitet wird. In einem Bearbeitungsbereich 11 des Werkstücks 10 bildet sich ein Schmelzbad 12, welches elektromagnetische Strahlung 13 emittiert. Die elektromagnetische Strahlung 13 gelangt über eine Fokussieroptik 14 auf einen Strahlteilerspiegel 15 zu einem Strahlteiler 16, der als Prisma ausgebildet sein kann.

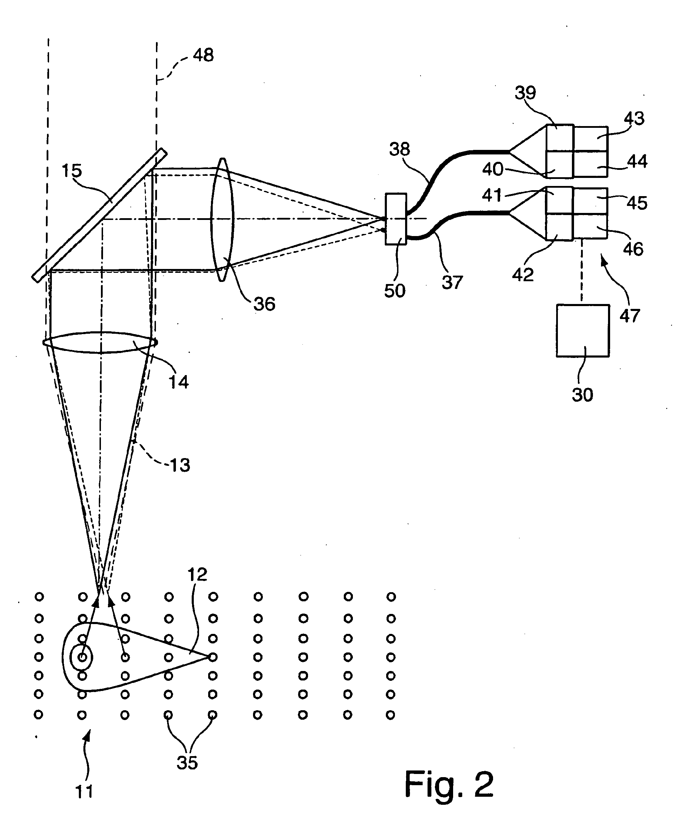

Der Strahlteilerspiegel 15 kann, wie in Fig. 1 und 2 dargestellt, für die Laserstrahlung 48 hochtransmissiv und für die Wellenlängenbereiche zur Thermographie reflektierend ausgeführt sein. Weitere Varianten sind möglich, wie eine Anordnung in der der Strahlteilerspiegel 15 für die Laserstrahlung hochreflektierend und für die Wellenlängenbereiche zur Thermographie hochtransmissiv ausgeführt ist.

Durch den Strahlteiler 16 wird die elektromagnetische Strahlung 13 auf mehrere Strahlengänge 17,18 aufgeteilt. Die Strahlengänge 17, 18 gelangen jeweils über eine als Fokussieroptik ausgebildete abbildende Optik 19,20 und eine Filteranordnung 21 auf ein als Matrix-Kamera ausgebildetes Detektorsystem 22. Die Fokussieroptik kann eine Linse und/oder einen Spiegel umfassen. Die abbildenden Optiken 19,20 sind so ausgeführt, dass der Abbildungsfehler durch chromatische Abberation ausgeglichen wird. Ferner können die Optiken 19, 20, insbesondere zur axialen und lateralen Positionierung, gemeinsam in Strahlrichtung sowie lateral verschiebbar sowie auch zueinander justierbar ausgeführt sein.

Die Filteranordnung 21 umfasst ein erstes Filter 23 zur Filterung einer ersten Wellenlänge und ein zweites Filter 24 zur Filterung einer zweiten Wellenlänge. Durch die Filterung erfolgt somit eine spektrale Selektion und es entstehen auf dem Detektorsystem 22 zwei unterschiedliche Strahlungsbilder 25,26 des Bearbeitungsbereichs 11. Aus diesen Strahlungsbildern 25,26 kann durch analytische Verfahren eine Absoluttemperatur und ein Emissionskoeffizient für jedes Flächenelement des Bearbeitungsbereichs 11 ermittelt werden. Die Analyse wird in einer Auswerteeinrichtung 30 durchgeführt. Die Absoluttemperatur und der Emissionskoeffizient geben wiederum Aufschluss über die Qualität des Bearbeitungsvorgangs.

Ausweislich der Figuren 1 und 2 ist ein Bearbeitungsbereich 11, der gemäß der Erfindung, die Kapillare, das Schmelzbad, die erstarrte Schmelze und die Wärmeeinflusszone umfasst, in mehrere Flächenelemente 35 unterteilt. Gemäß Fig. 2 gelangt die von den Flächenelementen 35 emittierte Strahlung über eine Fokussieroptik 14 auf einen Strahlteilerspiegel 15. Im Strahlengang der elektromagnetischen Strahlung 13 ist eine abbildende Optik 36 angeordnet, die die Strahlung jedes einzelnen Flächenelements 35 in Faseroptiken 37,38, die an einem Ende durch einen Halter 50 gehalten sind, einkoppelt. Über die Faseroptiken 37,38 gelangt die Strahlung zu Filterelementen 39 - 42, wobei jedem Flächenelement 35 und somit jeder Faseroptik 37,38 zwei Filterelemente 39 - 42 zugeordnet sind. Die durch die Filterelemente 39 - 42 gefilterte Strahlung wird durch als Fotodioden 43 - 46 einer Fotodiodenanordnung 47 ausgebildete Sensorelemente erfasst. Somit entstehen wiederum für jedes Flächenelement 35 unterschiedliche spektral selektive Strahlungsmesspunkte, die durch eine Auswerteeinheit 30 analysiert werden können. Eine Temperatur und ein Emissionskoeffizient werden für jedes Flächenelement 35 ermittelt. Die Anzahl der analysierten Flächenelemente 35 wird durch die Anzahl der Sensorelemente bestimmt. Die Fotodiodenanordnung 47 bildet das Sensorsystem.

Die optischen Fasern 37 bzw. die abgebildeten Bildpunkte 35 können als Matrix oder jeder weiteren beliebigen Anordnung (Kreis, Linie, Kreuz usw.) zueinander auf dem Werkstück abgebildet sein.

## Patentansprüche

1. Verfahren zur Überwachung eines Bearbeitungsbereichs (11) eines Werkstücks (10), an dem eine Laserbearbeitung durchgeführt wird, bei dem die von dem Bearbeitungsbereich (11) emittierte Strahlung durch ein Detektorsystem (22) erfasst wird, wobei die emittierte Strahlung ortsaufgelöst erfasst wird, **dadurch gekennzeichnet, dass** die Strahlung des die Kapillare, das Schmetz bad, die instarrte Schmelze und die Wärneanflusszone umfassenden Bearbeitungsbereichs (11), der in mehrere Flächenelemente vorteiteilt ist, für jedes auf das Detektorsystem (22) abgebildete Flächenelement (35) des Bearbeitungsbereichs (11) gleichzeitig bei zumindest zwei Wellenlängen erfasst wird, wobei für jedes von dem Detektorsystem (22) erfasste Flächenelement (35) aus der erfassten Strahlung ein Temperaturwert und ein Emissionskoeffizient ermittelt werden.

2. Verfahren nach Anspruch 1, **dadurch gekennzeichnet, dass** unter Berücksichtigung des Emissionskoeffizienten eine Qualitätsbewertung durchgeführt wird.

3. Verfahren nach einem der vorhergehenden Ansprüche, **dadurch gekennzeichnet, dass** für jedes Flächenelement (35) eine optische Filterung für zumindest zwei Wellenlängen durchgeführt wird.

4. Verfahren nach einem der vorhergehenden Ansprüche, **dadurch gekennzeichnet, dass** mehrere wellenlängenabhängige Bilder (25, 26) des Bearbeitungsbereichs erzeugt werden.

5. Vorrichtung zur Überwachung einer Laserbearbeitung eines Werkstücks (10), mit einer Filteranordnung (21) und einem Detektorsystem (22), **dadurch gekennzeichnet, dass** jedem abgebildeten Flächenelement (35) eines die Kapillare, das Schmetz bad, die instarrte Schmelze und die Wärneanflusszone umfassenden Bearbeitungsbereichs (11), der in mehrere Flächenelemente vorterteilt ist, zumindest zwei Sensorelemente zugeordnet sind, denen jeweils ein optisches Filter (23, 24, 39-42) zugeordnet ist, wobei die Filter (23, 24, 39-42) die emittierte Strahlung bei unterschiedlichen Wellenlängen filtern und dass eine Auswerteeinrichtung (30) zur Bestimmung eines Temperaturwerts und eines Emissionskoeffizienten für jedes Flächenelement (35) vorgesehen ist.

6. Vorrichtung nach Anspruch 5, **dadurch gekennzeichnet, dass** als Detektorsystem (22) eine Matrix-Kamera vorgesehen ist, oder dass als Detektorsystem (22) mehrere einzelne Kameras, insbesondere Matrix-Kameras, vorgesehen sind.

7. Vorrichtung nach Anspruch 6, **dadurch gekennzeichnet, dass** die oder zumindest eine Matrix-Kamera aus unterschiedlichen Halbleitermaterialien gefertigt ist.

8. Vorrichtung nach einem der vorhergehenden Ansprüche 5 bis 7, **dadurch gekennzeichnet, dass** das Detektorsystem mehrere Fotodiodenanordnungen (47) umfasst.

9. Vorrichtung nach Anspruch 8, **dadurch gekennzeichnet, dass** im Strahlengang vor den Fotodiodenanordnungen (39-42) Faseroptiken (37, 38) und/oder abbildende Optiken (36) angeordnet sind.

10. Vorrichtung nach einem der vorhergehenden Ansprüche 5 bis 9, **dadurch gekennzeichnet, dass** die Fotodioden (39 - 42) oder Faseroptiken (37), bzw. die Abbildungen der Flächenelemente (35), als Matrix oder in einer beliebigen anderen geometrischen Form zueinander angeordnet sind.

11. Vorrichtung nach einem der vorhergehenden Ansprüche 8 bis 10, **dadurch gekennzeichnet, dass** die Fotodioden (39-42) aus unterschiedlichen Halbleitermaterialien gefertigt sind.

12. Vorrichtung nach einem der vorhergehenden Ansprüche 5 bis 11, **dadurch gekennzeichnet, dass** die Filteranordnung (21) in die Kameramatrix integriert ist, auf der Matrixoberfläche vor den einzelnen Sensorelementen angeordnet ist oder zwischen dem Strahlteiler (16) und dem Detektorsystem (22) vorgesehen ist.

13. Vorrichtung nach einem der vorhergehenden Ansprüche 5 bis 12 **dadurch gekennzeichnet, dass** die Filteranordnung (21) in den Strahlteilerspiegel (15) integriert oder auf den Strahlteiler (16) aufgebracht bzw. in diesen integriert ist.

14. Vorrichtung nach einem der vorhergehenden Ansprüche 5 bis 13, **dadurch gekennzeichnet, dass** die Filteranordnung (21) ein Schachbrettmuster, ein Streifenmuster oder eine Anordnung optischer Einzelfilterelemente umfasst.

15. Vorrichtung nach einem der vorhergehenden Ansprüche 5 bis 14, **dadurch gekennzeichnet, dass** die abbildenden Optiken (19, 20) zum Ausgleich chromatischer Aberration, insbesondere zur axialen und lateralen Positionierung, zueinander justierbar ausgeführt sind.

## Claims

1. A method for monitoring a processing region (11) of a workpiece (10) on which laser processing is being carried out, in which method the radiation emitted by the processing region (11) is detected by a detector system (22), wherein the emitted radiation is detected in a space-resolved manner, **characterised in that** the radiation of the processing region (11), which comprises the capillary, the melting bath, the solidified melt and the heat influence zone and is divided into several surface elements, is detected for each surface element (35) of the processing region (11) imaged onto the detector system (22) at at least two wavelengths simultaneously, wherein a temperature value and an emission coefficient are determined from the detected radiation for each surface element (35) detected by the detector system (22).

2. A method according to claim 1, **characterised in that** a quality assessment is carried out based on the emission coefficient.

3. A method according to any one of the preceding claims, **characterised in that** optical filtering for at least two wavelengths is carried out for each surface element (35).

4. A method according to any one of the preceding claims, **characterised in that** a plurality of wavelength-dependent images (25, 26) of the processing region are produced.

5. An apparatus for monitoring laser processing of a workpiece (10), having a filter arrangement (21) and a detector system (22), **characterised in that** at least two sensor elements, each having an optical filter (23, 24, 39-42) associated therewith, are associated with each imaged surface element (35) of a processing region (11), which comprises the capillary, the melting bath, the solidified melt and the heat influence zone and is divided into several surface elements, wherein the filters (23, 24, 39-42) filter the emitted radiation at differing wavelengths, and an evaluating device (30) for determining a temperature value and an emission coefficient for each surface element (35) is provided.

6. An apparatus according to claim 5, **characterised in that** a matrix camera is provided as the detector system (22), or a plurality of individual cameras, especially matrix cameras, are provided as the detector system (22).

7. An apparatus according to claim 6, **characterised in that** the or at least one matrix camera is made from different semiconductor materials.

8. An apparatus according to any one of the preceding claims 5 to 7, **characterised in that** the detector system comprises a plurality of photodiode arrays (47).

9. An apparatus according to claim 8, **characterised in that** fibre optics (37, 38) and/or imaging optics (36) are arranged in the beam path in front of the photodiode arrays (39-42).

10. An apparatus according to any one of the preceding claims 5 to 9, **characterised in that** the photodiodes (39-42) or fibre optics (37), or the images of the surface elements (35), are arranged as a matrix or in any other desired geometric shape relative to one another.

11. An apparatus according to any one of the preceding claims 8 to 10, **characterised in that** the photodiodes (39-42) are made from different semiconductor materials.

12. An apparatus according to any one of the preceding claims 5 to 11, **characterised in that** the filter arrangement (21) is integrated in the camera matrix, is arranged on the matrix surface in front of the individual sensor elements or is provided between the beam splitter (16) and the detector system (22).

13. An apparatus according to any one of the preceding claims 5 to 12, **characterised in that** the filter arrangement (21) is integrated in the beam splitter mirror (15) or is mounted on or integrated in the beam splitter (16).

14. An apparatus according to any one of the preceding claims 5 to 13, **characterised in that** the filter arrangement (21) comprises a chessboard pattern, a striped pattern or an arrangement of optical single filter elements.

15. An apparatus according to any one of the preceding claims 5 to 14, **characterised in that** the imaging optics (19, 20) are configured to be adjustable relative to each other for compensation for chromatic aberration, especially for axial and lateral positioning.

## Revendications

1. Procédé de surveillance d'une zone d'usinage (11) d'une pièce (10) sur laquelle est effectué un usinage par laser, dans lequel le rayonnement émis par la zone d'usinage (11) est détecté par un système de détection (22), le rayonnement émis étant détecté avec résolution spatiale, **caractérisé en ce que** le rayonnement de la zone d'usinage (11) comprenant le capillaire, le bain de fusion, le bain solidifié et la zone affectée thermiquement, qui est subdivisée en plusieurs éléments de surface, est détecté en même temps à au moins deux longueurs d'onde pour chaque élément de surface (35) de la zone d'usinage (11) reproduit sur le système de détection (22), une valeur de température et un coefficient d'émission étant déterminés pour chaque élément de surface (35) détecté par le système de détection (22) à partir du rayonnement détecté.

2. Procédé selon la revendication 1, **caractérisé en ce qu'**une évaluation de qualité est effectuée en tenant compte du coefficient d'émission.

3. Procédé selon une des revendications précédentes, **caractérisé en ce qu'**un filtrage optique pour au moins deux longueurs d'ondes est effectué pour chaque élément de surface (35).

4. Procédé selon une des revendications précédentes, **caractérisé en ce que** plusieurs images (25, 26) de la zone d'usinage dépendantes de la longueur d'onde sont produites.

5. Dispositif de surveillance d'un usinage par laser d'une pièce (10), avec un dispositif de filtrage (21) et un système de détection (22), **caractérisé en ce qu'**à chaque élément de surface (35) reproduit d'une zone d'usinage (11) comprenant le capillaire, le bain de fusion, le bain solidifié et la zone affectée thermiquement, qui est subdivisée en plusieurs éléments de surface, sont associés au moins deux éléments capteurs à chacun desquels est associé un filtre optique (23, 24, 39-42), les filtres (23, 24, 39-42) filtrant le rayonnement émis à différentes longueurs d'ondes, et qu'un dispositif d'évaluation (30) est prévu pour déterminer une valeur de température et un coefficient d'émission pour chaque élément de surface (35).

6. Dispositif selon la revendication 5, **caractérisé en ce qu'**une caméra matricielle est prévue comme système de détection (22) ou que plusieurs caméras individuelles, en particulier des caméras matricielles, sont prévues comme système de détection (22).

7. Dispositif selon la revendication 6, **caractérisé en ce que** ladite ou ladite au moins une caméra matricielle est réalisée à partir de différents matériaux semiconducteurs.

8. Dispositif selon une des revendications précédentes 5 à 7, **caractérisé en ce que** le système de détection comprend plusieurs arrangements de photodiodes (47).

9. Dispositif selon la revendication 8, **caractérisé en ce que** des fibres optiques (37, 38) et/ou des optiques de reproduction (36) sont disposées avant les arrangements de photodiodes (39-42) dans le trajet des rayons.

10. Dispositif selon une des revendications précédentes 5 à 9 **caractérisé en ce que** les photodiodes (39-42) ou les fibres optiques (37), respectivement les reproductions des éléments de surface (35), sont disposées les unes par rapport aux autres sous forme de matrice ou selon une autre forme géométrique quelconque.

11. Dispositif selon une des revendications précédentes 8 à 10, **caractérisé en ce que** les photodiodes (39-42) sont réalisées à partir de différents matériaux semiconducteurs.

12. Dispositif selon une des revendications précédentes 5 à 11, **caractérisé en ce que** le dispositif de filtrage (21) est intégré dans la matrice de caméra, disposé sur la surface de la matrice devant les différents éléments capteurs ou prévu entre le diviseur de faisceau (16) et le système de détection (22).

13. Dispositif selon une des revendications précédentes 5 à 12, **caractérisé en ce que** le dispositif de filtrage (21) est intégré dans le miroir de diviseur de faisceau (15) ou appliqué sur le diviseur de faisceau (16), respectivement intégré dans celui-ci.

14. Dispositif selon une des revendications précédentes 5 à 13, **caractérisé en ce que** le dispositif de filtrage (21) comprend un motif en damier, un motif en bande ou une disposition d'éléments individuels de filtrage optique.

15. Dispositif selon une des revendications précédentes 5 à 14, **caractérisé en ce que** les optiques de reproduction (19, 20) sont réalisées réglables l'une par rapport à l'autre pour compenser l'aberration chromatique, en particulier pour le positionnement axial et latéral.
